(19) Europäisches Patentamt
European Patent Office
Office européen des brevets

(11) **EP 3 163 553 A1**

(12) **EUROPEAN PATENT APPLICATION**

(43) Date of publication:
**03.05.2017 Bulletin 2017/18**

(51) Int Cl.:
***G09B 19/02*** *(2006.01)* ***G09B 1/08*** *(2006.01)*

(21) Application number: **16151530.9**

(22) Date of filing: **15.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.11.2015 US 201514872205**

(71) Applicant: **Cooper, Mary E.**
**Town Creek, Alabama 35672 (US)**

(72) Inventor: **Cooper, Mary E.**
**Town Creek, Alabama 35672 (US)**

(74) Representative: **Romano, Giuseppe**
**Società Italiana Brevetti S.p.A**
**Piazza di Pietra, 39**
**00186 Roma (IT)**

(54) **LEARNING DEVICE**

(57) An interesting and easy to use hand held device for use in counting and solving arithmetic calculations, such as addition, subtraction, multiplication and simple division, and that in different ways. The device comprises three concentric disks with diameter of each disk descending from bottom to top disk; a pair of arms similar to clock hands at top of the disks and the three concentric disks with the pair of arms at top is rotatably coupled through the center of disks using a fastener. The top visible surface of each disk is divided into equal number of section and each section has a numerical figure, the middle disc's top surface also has small projections and number of projections in each section of middle disk is equal to the numerical figure of the section. Calculation could be performed by counting dots in association with printed numerals in the sections.

**FIGURE 2**

**Description**

FIELD OF INVENTION

The present invention generally relates to learning aid and in particular to a device that aids in counting and learning basic concepts of number, counting and arithmetic.

BACKGROUND OF INVENTION

The prior art is rich in educational aids for children that helps the children to learn basic arithmetic concepts, such as, addition, multiplication etc. Patents disclosing educational aids include: U.S. Patent No. 4,634,385 issued to Stemper discloses an apparatus that includes a pair of concentric disks that are relatively rotatable to present to the child a multiplicity of problems and possible answers to each problem that enable and encourage a child to develop mathematical skills in an interesting and easy to use manner and U.S. Patent No. 1,662,503 issued to Krieger discloses a device that aids children in learning arithmetic, such as addition, subtraction, multiplication and division and involves counting an indicated number of concentric rings or circles from a given point to determine the answer, or to perform other manual acts.

Other patents include: U.S. Patent No. 3,289,324 issued to Benson discloses a device to teach children the simple basic steps in addition, subtraction, multiplication and division and also to help children compute problems in amounts, weights, space, length, area, volume, or any other measurements and U.S. Patent No. 4,389,193 issued to Phillips discloses a device to teach young children to read. As shown, although there are several types of aids and devices for helping children to learn is in the prior art, there is still a need for a new and better learning aid that is simple, easy to use and fun for children.

SUMMARY OF THE INVENTION

An easy to use hand held device for use in counting and solving arithmetic problems, such as addition, subtraction, multiplication and simple division is disclosed. The device comprises three concentric disks with lowest or first disk having the highest diameter a middle disk having a diameter less than first disk the top disk is smallest in diameter, and a pair of arms similar to clock hands located at top of the disks. The three concentric disks at center and the pair of arms at end are rotatably coupled using a fastener, such that the individual disks and arms are rotatable relative to each other. The top visible surface first disk is divided into equal sections and each section contains number words starting from lowest to the highest possible number wherein the top arch visible disk have roman numerals that are located above each number word section. The top visible surface of middle disk is divided into number of sections same as the first disk. Each section in the middle disk has a numeral valve and dots corresponding to the numeral value. The smallest or third disk is also divided in same number of sections as the other two and has numerals. Each section of the disk could be aligned with section of adjacent disks. The dots are projections or small solid objects that are fixed or attached to the surface of disk. In use, a user figures out different ways to count or solve simple arithmetic problems.

It is an object of the present invention to provide an interesting and easy to use handheld device for counting and performing basic arithmetic calculations such as addition, subtraction, multiplication and division.

It is another objective of the invention to provide a device that allows the user to experiment, explore, solve, explain and be creative in problem solving using math or logics and to figure out various math problems.

It is still yet another object of the invention to provide a device that may be used for brain storming activities which reinforces oral expressions and improve communications skills and which may be used in homes or schools.

In addition to the various objects and advantages of the present invention described with some degree of specificity above it should be obvious that additional objects and advantages of the present invention will become more readily apparent to those persons who are skilled in the relevant art from the following more detailed description of the invention.

BRIEF DESCRIPTION OF THE DRAWINGS

To further clarify various aspects of some example embodiments of the present invention, a more particular description of the invention will be rendered by reference to specific embodiments thereof which are illustrated in the appended drawing. It is appreciated that the drawing depicts only illustrated embodiments of the invention and are therefore not to be considered limiting of its scope. The invention will be described and explained with additional specificity and detail through the use of the accompanying drawing in which:

FIGURE 1 is a perspective view of the learning device according to the present invention; and

FIGURE 2 is the front view of the device according to current invention showing three concentric disks, the counting dots and the pair of arms; and

FIGURE 3 is the front view of the device according to current invention showing the stacking assembly of the three concentric disks.

DETAIL DESCRIPTION OF THE INVENTION

The present invention provides an interesting and easy to use device which could be used by people of all ages for counting and doing simple algebraic operations like addition, subtraction, multiplication and division. Before explaining at least one embodiment of the invention in detail, it is to be understood that the invention is not limited in its application to the details of construction and the arrangements of the components set forth in the following description. The invention is capable of other embodiments and of being practiced and carried out in various ways. Also it is to be understood that the phraseology and terminology employed herein are for the purpose of description and should not be regarded as limiting.

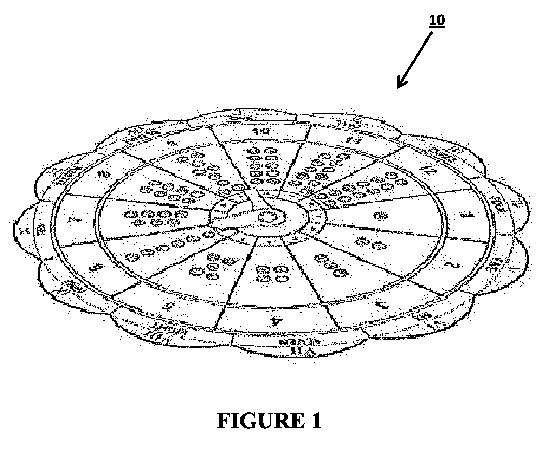

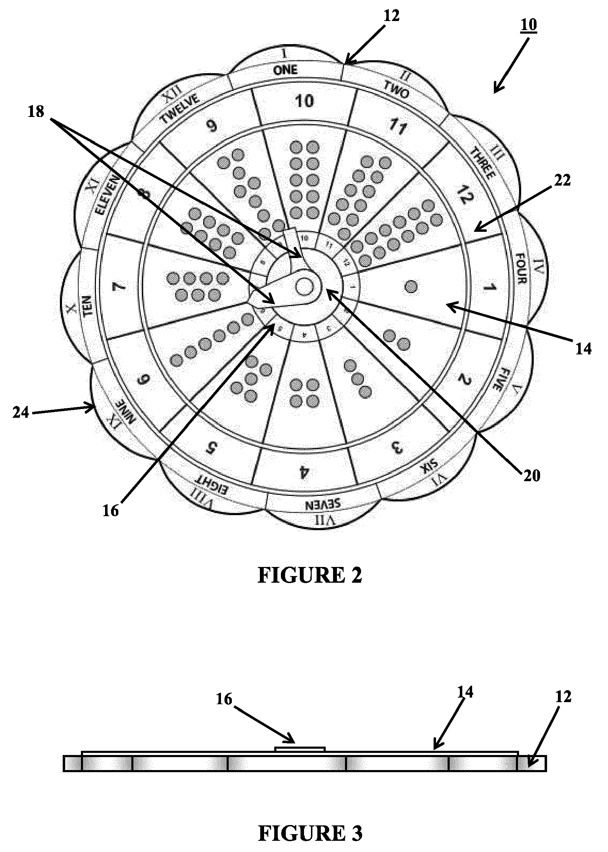

Referring now to **FIGURES 1** through **3,** the device **10** according to present invention includes three concentric disks wherein the lowest or first disk **12** has the highest diameter followed by the middle disk **14** which has lesser diameter then the first disk. The top or third disk **16,** also known herein after as the tracker (dial), is smallest in diameter. Preferably the first disk **12** is 7-8 inches in diameter and the top disk **16** is 2 inches in diameter. Further, at top of all the three concentric disks is coupled a pair of arms **18.** The arms are similar to hands in a wall clock but unlike the hands of wall clock, the arms of current invention could be of equal size. The three concentric disks and the pair of arms are coupled through the center of disks and lower end of arms using a fastener **20,** such that each of the disks and arms may be rotated with respect to each other. The fastener could be a screw or any other means obvious to a skilled person for securing concentric disks in a rotatable manner.

The visible top surface of first disk **12** is divided into twelve equal sections and each section has a word number i.e. one, two ......, twelve. The arc outside edge of first disk twelve **12** also has roman numerals **24** (I - XII) around the circumference **24** of disk **12.** The top visible surface of a middle circle **22** is also divided in twelve equal sections and each section has a numeral i.e. 1, 2, 3....12. The middle section or middle disk **14** has small solid objects called hereinafter as dots. The number of dots in each section is equal to the numeral value of the section, for example, a section having numeral value 8 would have eight dots. The dots could be small projections or could be small solid objects that could be attached to the surface of disk. The dots could be either temporary attached, such that using magnetic attractions or fixed using an adhesive or like. The surface and shape of dots is such that the number of dots in each section could be easily counted by placing finger tips on the dots. Moreover, the dots could have a coating of luminescent material to brighten each dot which could provide aesthetic appeal to the device **10** and could be more likened by children. Similarly, the top disk is also divided in twelve equal sections and sections of each disk could be aligned against the section of another disk. For example, the section eight of third disk could be aligned against the eighth section of middle disk and again the 8$^{th}$ section of middle disk could be aligned against the first disk. Each section of top disk contains numeral values i.e.1, 2, 3....12. Also, Roman numerals (I - XII) are added as an additional function or component to the design **10** on the outer surface of first ring **12.**

The device could be made of materials such as cardboard, plastic or a cardboard having the coating of plastic. The use of cardboard or plastic makes the device light in weight that could be easily carried. The surface of the device **10** could be smoothened to provide shiny finish to the device that could further increase the aesthetic appeal of the device. The outer edges of each disk **12, 14, 16** could be arched for easier rotation of the disks. The middle disk **14** could be made of material or have a coating of material that provides magnetic attractions. The dots or other objects could be attached to the middle disk **14** through magnetic attractions. The third disk **16** and pair of arms **18** are used as a tracker to help the user to hold focus, so that the user does not lose their place of position while counting. The device **10** further includes magnetic chips that could be removably coupled to the middle circle **22** using magnetic attractions. The magnetic chips could be further used to maintain focus in larger problems, such as adding three numerals (not shown).

In use, the device **10** aids the user in various math or logic problems and to figure out different methods of solving the problem which makes the invention interesting and challenging. This may increase the likeness of the device **10** to help children to learn counting and arithmetic. Young children and adults could use the invention for brainstorming activities by figuring out different ways to solve the problem and finding a more creative method. Such a practice may reinforce oral expressions and improve communication skills.

By way of example, calculations are performed by rotating the device **10** to different positions. When the dot counter is in its original state, all the numbers will be lined up correctly under the number words. For example, number words nine on first disk **12,** number 9 and 9 dots on middle disk **14,** the number 9 on third disk **16** will all fit together like a puzzle. By maneuvering the dot counter to different positions, the user can explore different ways of solving the problem. A few examples of different ways and strategies that the user can use when doing math calculations includes:

Examples of addition:

$$(5+8),$$

wherein
the user points each of the two arms **18** to numerals 5 and 8 on middle disk **14** to keep the focus on 5 and 8 while calculating. When the two arms **18** are correctly positioned, count the dots in each section i.e. sections 5 and 8.

In another example the following arithmetic equation is solved using device 10 with the following process:

$$(10 + 8)$$

First, find the number word which is 10 at the first disk **12,** and align it with the 10 number on middle disk **14.** Then, rotate third disk **16** or tracker (dial), so that numeral 8 on tracker is lined up directly under the 10. Now start with the 8 on the tracker (dial) and begin counting the dots by saying 8 first and just count on dots with the next number being 9, 10, 11, 12, 13 etc, getting the answer which is 18. In yet another example the following arithmetic equation is solved using device 10 with the following process:

$$(3+5)$$

First, find the number word which is THREE on first disk. Next, rotate or maneuver the device so that the number 5 on middle disk is directly under the number word THREE. Then say three aloud and count on dots with the next number being 4, 5,6,7,8. The answer is eight. In yet another example the following arithmetic equation is solved using device 10 with the following process:

$$(10+10)$$

The user would say the number 10 at the top of device and begin counting on the dots with the first dot being 11, 12, 13....until all dots are counted or the user can simply count the dots twice.

Examples of subtraction:

$$(9-4)$$

When subtracting 4 from 9, the user would locate the number 9 on the middle disk. Then, the user could use his finger cover up the number to be subtracted, i.e. 4. The remaining dots are 5 which is the answer. The more advanced user can count backward 4 dots with the remaining dots being the answer.

Examples of multiplication: In order to do basic multiplication, the user would need to use the tracker (dial) to keep track of the number of times a number is to be multiplied. For example, if a person was learning their multiplication facts (3's), user would need to use the tracker (dial) to turn every time after completing a count. For example, for 3 times 1, user would count the dots on 3 one time, user would turn the tracker (dial) and place the hands to one on the tracker (dial). That will give the answer to 3 times one which is three. When counting the dots two times, user would turn the hands to 2. That is an indicator that user need to count the dots twice which will give the answer 6. Keep going in sequence to 12. A more advanced user can just use the tracker (dial) to whole their place.

Examples of division: In order to calculate simple division problems, the user will line up the tracker (dial) with the top number.(Ex: 12/2=6) . The user will locate the number 12 at the top of the dot counter, find the number 2 on the tracker and line up 2 under the 12. The number 2 on the tracker (dial) tells the user that they are to group the dots into groups of 2's in the group of 12 dots. Dots are small enough that the users can use their fingers to cover and count.

Other Examples:

$$(3+5+4)$$

User would need the chips to count the dots in three different spaces. The user may place the magnetic chips in sections 3, 5 and 4 in the middle circle and count the dots. Or, the user may point the arms to the sections 3 and 5, and use magnetic chip for last section i.e. 4.

Thus, the present invention could be used for multiple purposes and provides a compact and easy to carry device. The device allows the user to experiment explore, solve, explain and be creative in problem solving using math or logics and to figure out various math problems. The invention could be used by children in the school and homes. Some other skills that the present invention offers include recognizing odd and even numbers. Odd and even numbers will be more visible and meaningful if they are color coded (not shown). Since the arms resemble the hands of a wall clock, the apparatus may also be used to introduce very basic time telling skills using numerical numbers or roman numerals. Lastly, very early learners can learn to count on to another number as well. Those skilled in the art should appreciate that they can readily use the disclosed conception and specific embodiment as a basis for designing or modifying other structures for carrying out the same purposes of the present invention and that such other structures do not depart from the spirit and scope of the invention in its broadest form.

**Claims**

1. A device for use in counting and performing basic arithmetic calculation, said device comprises:

   a. three concentric disks, wherein a first and lowest disk has highest diameter, a middle disk having diameter less than the first disk and a top or third disk that is smallest in diameter;
   b. a pair of arms, said arms are positioned on top of said concentric disk;
   c. a fastener to rotatably couple said concentric disk in the center and through end portion of said pair of arms;
   a top visible surface of said first disk is divided into n number of sections, and each of said section has a numeric word, said n is a numeral value; wherein
   top visible surface of said middle disk is divided into n number of section and each section has a numerical number, each section has small solid objects coupled to said surface and number of solid objects in each section is equal to said numeral number of the section; wherein
   said third disk is divided into n sections and each section has a numerical number.

2. The device of claim 1, wherein said arithmetic operations consist of addition.

3. The device of claim 1, wherein said arithmetic operations consist of subtractions.

4. The device of claim 1, wherein said arithmetic operations consist of multiplications.

5. The device of claim 1, wherein said arithmetic operations consist of simple divisions.

6. The device of claim 1, wherein the diameter of first disk is 7-8 inches and the diameter of third disk is 2 inches.

7. The device of claim 1, wherein the value of n is 12.

8. The device of claim 1, wherein the value of n is 6-20.

9. The device of claim 1, wherein said middle board is made of material or has a coating of material that supports magnetic attraction.

10. The device of claim 1, wherein said device further comprise magnetic chips used for tracking the calculations.

11. The device of claim 1, wherein said small solid objects are small projection having shape and size that allows a user to count the projections using finger.

12. A device for counting and solving arithmetic problems, comprising:

    a. three concentric disks, wherein a first and lowest disk has highest diameter, a middle disk having diameter less than the first disk and a top or third disk that is smallest in diameter;
    b. a pair of arms, said arms are positioned on top of said concentric disk;
    c. a fastener to rotatably couple said concentric disk in the center and through end portion of said pair of arms;
    the top visible surface of said first disk is divided into n number of sections, and each of said section has a numeric word, said n is a numeral having value in between 6-36.
    the top visible surface of middle disk is divided into n number of section and each section has a numerical number, each section has small solid objects coupled to the surface and number of solid objects in each section is equal to the numeral number of the section;
    the third disk is divided into n sections and each section has a numerical number; and
    said first disk displaying roman numeral values.

13. The device of claim 12, wherein said small solid objects are small projection having shape and size that allows a user to count the projections using finger.

14. The device of claim 12, wherein said method further comprises counting the dots with the value of printed numerals in each section of disks.

**FIGURE 1**

**FIGURE 2**

**FIGURE 3**

Europäisches
Patentamt

European
Patent Office

Office européen
des brevets

# EUROPEAN SEARCH REPORT

Application Number

EP 16 15 1530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/081901 A1 (3R1 LTD [GB]; MAXEY ANDREW DOMINIC [GB]) 23 September 2004 (2004-09-23) | 1-8, 11-14 | INV. G09B19/02 G09B1/08 |
| Y | * page 2 - page 4 * * figures 1,5 * * last paragraph; page 17 * | 9,10 | |
| Y | Anonymous: "Magnetic Ten Frame Boards", , 14 July 2014 (2014-07-14), XP055256049, Retrieved from the Internet: URL:http://www.reallygoodstuff.com/magnetic-ten-frame-boards/p/701276/ [retrieved on 2016-03-08] * the whole document * | 9,10 | |
| Y | US 4 832 605 A (BRAGIN ALEXANDER [US]) 23 May 1989 (1989-05-23) * abstract * * figure 1 * | 9,10 | |

TECHNICAL FIELDS
SEARCHED     (IPC)

G09B

The present search report has been drawn up for all claims

| Place of search | Date of completion of the search | Examiner |
|---|---|---|
| Munich | 8 March 2016 | Thielemann, Benedikt |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 15 1530

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2016

| Patent document cited in search report | | Publication date | Patent family member(s) | Publication date |
|---|---|---|---|---|
| WO 2004081901 | A1 | 23-09-2004 | NONE | |
| US 4832605 | A | 23-05-1989 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4634385 A
- US 1662503 A
- US 3289324 A
- US 4389193 A